# EUROPÄISCHE PATENTSCHRIFT

(11) **EP 1 325 294 B1**
(45) Veröffentlichungstag und Bekanntmachung des Hinweises auf die Patenterteilung: **16.03.2005**
(21) Anmeldenummer: 01960624.3
(22) Anmeldetag: 04.08.2001
(51) Int. Cl.: G01L 7/08, G01L 19/14, F16J 15/06

(54) **MEMBRAN DRUCKMESSAUFNEHMER MIT DICHTUNG MIT FEDERRING GEGEN VERFORMUNG**
MEMBRANE PRESSURE SENSOR COMPRISING A SEAL WITH A COUNTER-DEFORMATION SPRING WASHER
CAPTEUR DE MESURE DE PRESSION A MEMBRANE, COMPRENANT UNE GARNITURE AVEC RONDELLE-RESSORT CONTRE LA DEFORMATION

(30) Priorität: 10.10.2000 DE 10049996
(43) Veröffentlichungstag der Anmeldung: 09.07.2003
(73) Patentinhaber: Endress + Hauser GmbH + Co. KG., 79689 Maulburg (DE)
(72) Erfinder: HEGNER, Frank, 79540 Lörrach (DE); FLÖGEL, Karl, 79650 Schopfheim (DE); BANHOLZER, Karlheinz, 79688 Hausen (DE); ROSSKOPF, Bernd, 79688 Hausen (DE)
(74) Vertreter: Andres, Angelika
(86) Internationale Anmeldenummer: PCT/EP2001/009030
(87) Internationale Veröffentlichungsnummer: WO 2002/031459

(56) Entgegenhaltungen:
- EP-A- 0 723 143
- EP-B- 0 403 257
- EP-B- 0 594 808
- US-A- 4 798 089
- US-A- 5 184 514

## Beschreibung

Die Erfindung betrifft einen Druckmeßaufnehmer mit einem Gehäuse, einem mit dem Gehäuse verbundenen Prozeßanschluß, der dazu dient ein Medium dessen Druck zu messen ist einer im Gehäuse angeordneten Membran zuzuführen, welche Membran im Betrieb eine Auslenkung erfährt, die vom zu messenden Druck abhängt, und einer Dichtung, die einen zwischen dem Gehäuse und dem Prozeßanschluß und/oder der Membran bestehenden Spalt abdichtet.

In der Druckmeßtechnik werden z.B. Absolutdruck-, Relativdruck- und Differenzdruckmeßanordnungen verwendet. Bei Absolutdruckmeßanordnungen wird ein zu messender Druck absolut, d.h. als Druckunterschied gegenüber einem Vakuum erfaßt. Mit einem Relativdruckmeßanordnungen wird ein zu messender Druck in Form eines Druckunterschiedes gegenüber einem Referenzdruck, z.B. einem Druck, der dort herrscht, wo sich der Meßaufnehmer befindet, aufgenommen. Bei den meisten Anwendungen ist dies der Atmosphärendruck am Einsatzort. Es wird also bei Absolutdruckmeßanordnungen ein zu messender Druck bezogen auf einen festen Bezugsdruck, den Vakuumdruck, und bei Relativdruckmeßanordungen ein zu messender Druck bezogen auf einen variablen Bezugsdruck, z.B. den Umgebungsdruck, erfaßt. Ein Differenzdruckmeßanordnung erfaßt eine Differenz zwischen einem ersten und einem zweiten einer Differenzdruckmeßzelle zugeführten Druck.

Diese Druckmeßanordnungen können alle mit Druckmeßaufnehmern der eingangs genannten Art realisiert werden.

Um ein möglichst großes Spektrum der möglichen Anwendungen, z.B. in der Chemie und in der verarbeitenden Industrie, abdecken zu können, sind Dichtungen erforderlich, die eine hohe chemische Beständigkeit aufweisen. Als Dichtungsmaterialien eignen sich z.B. Polyfluorkarbone, wie z.B. Polytetrafluorethylen (PTFE).
Die meisten chemisch hochbeständigen Dichtmaterialien sind jedoch fließfähig und verändern ihre Form, wenn sie großen Druck- und/oder Temperaturänderungen ausgesetzt sind. In der Druckmeßtechnik besteht die Gefahr, daß sich Dichtungen aus diesen Werkstoffen mit der Zeit verformen und undicht werden. Dies ist je nach Anwendung sehr gefährlich, weil z.B. sehr heiße unter hohem Druck stehende chemisch sehr aggressive Medien durch den Spalt zwischen dem Gehäuse und dem Prozeßanschluß und/oder der Membran austreten können.

In der US-A 4,798,089 ist ein Druckmeßaufnehmer beschrieben mit
- einem Gehäuse,
- einem mit dem Gehäuse verbundenen Prozeßanschluß,
   -- der dazu dient ein Medium dessen Druck zu messen ist einer im Gehäuse angeordneten Membran zuzuführen,
      --- welche Membran im Betrieb eine Auslenkung erfährt, die vom zu messenden Druck abhängt, und
- einer Dichtung,
   -- die einen zwischen dem Gehäuse und dem Prozeßanschluß bestehenden Spalt abdichtet,
   -- die unmittelbar an dem Spalt anliegt und den Spalt überdeckt,
   -- die zwischen dem Gehäuse und einem äußeren druckunempfindlichen Rand der Membran eingespannt ist.

Die Membran ist eine metallische Trennmembran eines Druckmittlers, der mit einer Flüssigkeit gefüllt ist, die einen auf die Trennmembran einwirkenden Druck auf eine Druckmeßzelle überträgt. Damit eine Dichtung aus einem über Druck und/oder Temperatur fließfähigen Material einsetzbar ist, ist eine metallische Einfassung vorgesehen, die eine erste an der Dichtung anliegende Ringfläche aufweist, die mit der Membran durch eine Schweißung fest verbunden ist und die eine zweite Ringfläche aufweist, die an der Dichtung anliegt und eine in Richtung des Spalts wirkende Federkraft auf die Dichtung ausübt.

Es werden in der Druckmeßtechnik vorteilhaft keramische Druckmeßzellen eingesetzt, da keramische Druckmeßzellen eine Meßgenauigkeit aufweisen, die über sehr lange Zeit stabil ist. Ein Grund hierfür ist die feste ionische Bindung von Keramik, durch die der Werkstoff sehr dauerhaft ist und im Vergleich zu anderen Werkstoffen, z.B. Metallen, praktisch nicht altert.

Keramische Druckmeßzellen sind bislang üblicherweise an einem äußerem Rand unter Zwischenfügung einer Dichtung in ein Gehäuse eingespannt. Ein zu messender Druck ist der Membran durch eine Öffnung im Gehäuse oder einen mit dem in der Regel metallischen Gehäuse verbunden Prozeßanschluß zugeführt. Solchen Meßzellen kann ein zu messender Druck direkt zugeführt werden. Die Verwendung z.B. eines vorgeschalteten Druckmittlers ist bei diesen Druckmeßzellen üblicherweise nicht vorgesehen.

Keramik weist eine sehr hohe chemische Beständigkeit auf und es wäre daher von großem Vorteil, die vorgenannten chemisch hoch beständigen Dichtmaterialien auch in Druckmeßaufnehmern mit keramischen Druckmeßzellen einsetzen zu können. Eine Einfassung, wie sie aus dem oben genannte Stand der Technik bekannt ist, ist jedoch in Verbindung mit keramischen Druckmeßzellen nicht einsetzbar, da die Einfassung nicht auf eine Membran aus Keramik aufgeschweißt werden kann.

Es ist eine Aufgabe der Erfindung, einen Druckmeßaufnehmer mit einem Gehäuse, einem mit dem Gehäuse verbundenen Prozeßanschluß und einer Dichtung, die einen zwischen dem Gehäuse und dem Prozeßanschluß und/oder der Membran bestehenden Spalt abdichtet, anzugeben, der eine Dichtung aus einem chemisch hochbeständigen Werkstoff aufweisen kann und bei dem die Membran sowohl aus Keramik als auch aus Metall bestehen kann.

Hierzu besteht die Erfindung in einem Druckmeßaufnehmer mit
- einem Gehäuse,
- einem mit dem Gehäuse verbundenen Prozeßanschluß,
   -- der dazu dient ein Medium, dessen Druck zu messen ist, einer im Gehäuse angeordneten Membran zuzuführen,
      --- welche Membran im Betrieb eine Auslenkung erfährt, die vom zu messenden Druck abhängt,
- einer Dichtung,
   -- die einen zwischen dem Gehäuse und dem Prozeßanschluß und/oder der Membran bestehenden Spalt abdichtet,
   -- die unmittelbar an dem Spalt anliegt und den Spalt überdeckt,
   -- die zwischen dem Gehäuse und der Membran eingespannt ist, und
- einer im Querschnitt zweischenkligen Feder,
   -- deren erster und zweiter Schenkel einen spitzen Winkel einschließen,
   -- deren erster Schenkel eine vom zweiten Schenkel abgewandte Schenkelfläche aufweist, die auf einer Stützfläche aufliegt und mit dieser fest verbunden ist und
   -- deren zweiter Schenkel eine vom ersten Schenkel abgewandte Schenkelfläche aufweist, die flächig an der Dichtung anliegt und eine in Richtung des Spalts wirkende Federkraft auf die Dichtung ausübt.

Gemäß einer Ausgestaltung besteht die Dichtung aus einem Fluorkarbon, insb. aus Polytetrafluorethylen (PTFE).

Gemäß einer weiteren Ausgestaltung ist die Stützfläche metallisch, und die Feder ist durch eine Schweißung mit der Stützfläche verbunden.

Gemäß einer weiteren Ausgestaltung besteht die Feder aus einem federelastischen Metall.

Gemäß einer ersten Ausgestaltung ist die Membran eine in dem Gehäuse angeordnete Meßmembran einer keramischen Druckmeßzelle. Der Prozeßanschluß weist vor der Meßmembran eine, von einer zylindrischen Mantelfläche und einer daran an deren membran-abgewandten Seite angrenzenden sich radial nach innen erstreckende Absatzfläche eingegrenzte, ringförmige Ausnehmung auf, und die Absatzfläche bildet die Stützfläche. Die Dichtung weist einen dreieckigen Querschnitt auf und eine erste Mantelfläche der Dichtung liegt an einem äußeren druckunempfindlichen Rand der Meßmembran auf, eine zweite Mantelfläche der Dichtung liegt an der zylindrischen Mantelfläche auf, und eine dritte Mantelfläche der Dichtung liegt flächig an der zweiten Schenkelfläche der Feder an.

Gemäß einer zweiten Ausgestaltung ist die Membran eine metallische Trennmembran eines im Gehäuse angeordneten Druckmittlers. Der Prozeßanschluß weist vor der Trennmembran eine, von einer zylindrischen Mantelfläche und einer daran an deren membran-abgewandten Seite angrenzenden sich radial nach innen erstreckende Absatzfläche eingegrenzte, ringförmige Ausnehmung auf, und die Absatzfläche bildet die Stützfläche. Die Dichtung weist einen dreieckigen Querschnitt auf, und eine erste Mantelfläche der Dichtung liegt an einem äußeren druckunempfindlichen Rand der Meßmembran auf, eine zweite Mantelfläche der Dichtung liegt an der zylindrischen Mantelfläche auf, und eine dritte Mantelfläche der Dichtung liegt flächig an der zweiten Schenkelfläche der Feder an.

Gemäß einer dritten Ausgestaltung ist die Membran eine metallische Trennmembran eines im Gehäuse angeordneten Druckmittlers. Das Gehäuse weist vor der Trennmembran eine von einer zylindrischen Mantelfläche umgebene Ausnehmung auf. Der Prozeßanschluß ist vor der zylindrischen Mantelfläche angeordnet und weist eine an eine membran-abgewandte Seite der zylindrischen Mantelfläche angrenzende sich radial nach innen erstreckende Absatzfläche auf, und eine äußere druckunempfindliche Ringfläche der Trennmembran bildet die Stützfläche. Die Dichtung weist einen dreieckigen Querschnitt auf, und eine erste Mantelfläche der Dichtung liegt auf der Absatzfläche auf, eine zweite Mantelfläche der Dichtung liegt an der zylindrischen Mantelfläche auf, und eine dritte Mantelfläche der Dichtung liegt flächig an der zweiten Schenkelfläche der Feder an.

Ein Vorteil der erfindungsgemäßen Druckaufnehmer ist, daß aufgrund der speziellen Form der Feder auch über Druck und/oder Temperatur unter Umständen fließfähige Werkstoffe für die Dichtung eingesetzt werden können. Dies ist nicht nur in Verbindung mit metallischen Membranen sondern genauso auch bei keramischen Membranen möglich, ohne daß andere Feder- und/oder Dichtungsformen verwendet werden müssen.

Ein weiterer Vorteil besteht darin, daß die Dichtung optimal positioniert ist. Sie liegt unmittelbar vor vorhandenen Spalten und wird durch die Federwirkung der Feder in Richtung der Spalte gepreßt. Ein großer durch ein Medium, dessen Druck zu messen ist, auf die Feder einwirkender Druck führt zu einer Verstärkung der Federwirkung in diese Richtung. Ein Entweichen der Dichtung aufgrund einer druckbedingten Verformung der Dichtung kann somit auch bei hohen einwirkenden Drücken nicht eintreten.

Die Erfindung und weitere Vorteile werden nun anhand der Figuren der Zeichnung, in denen zwei Ausführungsbeispiele dargestellt ist, näher erläutert.
- Fig. 1: zeigt einen Schnitt durch einen erfindungsgemäßen Druckmeßaufnehmer mit einer keramischen Membran; und
- Fig. 2: zeigt einen Schnitt durch einen erfindungsgemäßen Druckmeßaufnehmer mit einer metallischen Membran.

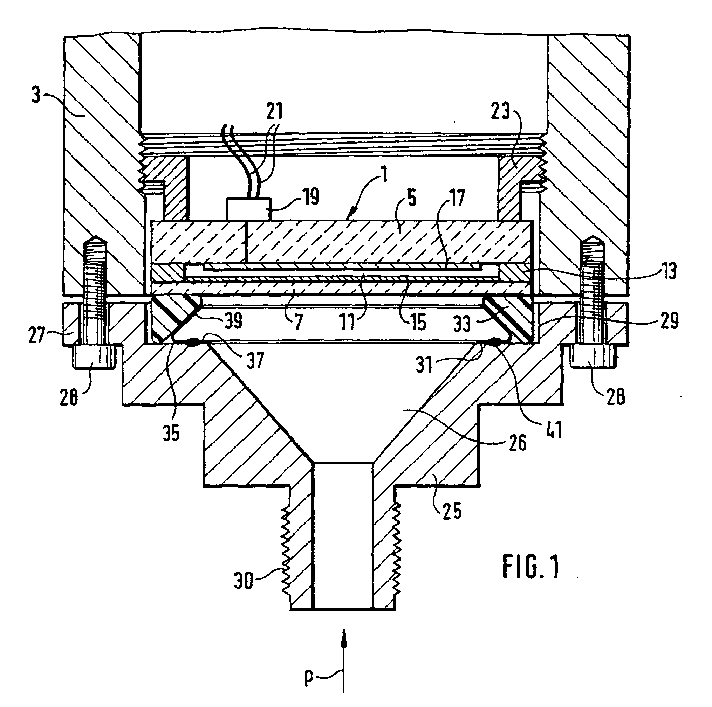

Fig. 1 zeigt einen Schnitt durch einen Druckmeßaufnehmer mit einer keramischen Druckmeßzelle 1. Der Druckmeßaufnehmer weist ein in dem dargestellten Ausführungsbeispiel zylindrisches Gehäuse 3 auf. In das Gehäuse 3 ist die keramische Druckmeßzelle 1 derart eingesetzt, daß sie im wesentlichen frontbündig mit dem Gehäuse 3 abschließt.

Die Druckmeßzelle 1 weist einen Grundkörper 5 und eine Membran 7 auf. Der Grundkörper 5 und die Membran 7 bestehen aus Keramik. Die Membran 7 und der Grundkörper 5 sind an deren Rand unter Bildung einer Meßkammer 11 mittels einer Fügestelle 13 druckdicht und gasdicht miteinander verbunden. Die Membran 5 ist druckempfindlich, d.h. ein auf sie einwirkender Druck p bewirkt eine Auslenkung der Membran 5 aus deren Ruhelage.

Die Druckmeßzelle 1 weist einen Wandler zur Umwandlung der druckabhängigen Auslenkung der Membran 5 in eine elektrische Meßgröße auf.

In dem dargestellten Ausführungsbeispiel einer kapazitiven Druckmeßzelle 1 umfaßt der Wandler eine auf einer Innenseite der Membran 5 angeordnete Elektrode 15 und mindestens eine auf einer gegenüberliegenden meßmembranzugewandten Außenseite des Grundkörpers 5 angeordnete Gegenelektrode 17. Die Gegenelektrode 17 des Grundkörpers 5 ist durch den Grundkörper 5 hindurch zu dessen Außenseite hin elektrisch kontaktiert und führt zu einer auf dem Grundkörper 5 angeordneten elektronischen Schaltung 19.

Elektrode 15 und Gegenelektrode 17 bilden einen Kondensator und die elektronische Schaltung 19 formt eine elektrische Meßgröße, hier die Kapazitätsänderungen des Kondensators, in ein elektrisches Meßsignal, z.B. in eine sich entsprechend ändernde elektrische Spannung, um. Die Meßgröße ist über Anschlußleitungen 21 zugänglich. Sie kann z.B. einer weiteren elektronischen Einheit zur weiteren Verarbeitung und/oder Auswertung zugeführt werden.

Im Betrieb wirkt auf eine Außenseite der Membran 7 ein zu messender Druck p ein. Dies ist in Fig. 1 durch einen Pfeil symbolisch dargestellt. Der Druck p bewirkt eine druckabhängige Auslenkung der Membran 7, die von dem Wandler in die elektrische Meßgröße umgewandelt wird.

Anstatt des beschriebenen kapazitiven Wandlers können auch andere Wandlertypen eingesetzt werden. Beispiele hierfür sind auf der Meßmembran angeordnete, z.B. zu einer Wheatstoneschen Brücke zusammengeschlossene Dehnungsmeßstreifen oder piezoresistive Elemente.

Die Membran 7 schließt frontbündig mit dem Gehäuse 3 ab und auf einer membran-abgewandten Seite des Grundkörpers 5 ist in das Gehäuse 3 ein Gewindering 23 eingeschraubt, der mit einer Stirnfläche auf einer äußeren Ringfläche des Grundkörpers 5 aufliegt.

Das Gehäuse 3 ist mit einem Prozeßanschluß 25 verbunden, der dazu dient das Medium dessen Druck p zu messen ist der im Gehäuse 3 angeordneten Membran 7 zuzuführen. Die Membran 7 erfährt dann im Betrieb eine Auslenkung, die vom zu messenden Druck p abhängt.

Der Prozeßanschluß 25 ist im wesentlichen zylindrisch und stellt quasi eine Verlängerung des Gehäuses 3 dar. Er weist eine axiale durchgehende Bohrung 26 auf, deren Innendurchmesser in gehäuse-zugewandter Richtung zunimmt, so daß vor der Membran 7 eine Kammer besteht, die im Betrieb mit dem Medium, dessen Druck p zu messen ist, gefüllt ist.

Der Prozeßanschluß 25 weist an dessen gehäuse-zugewandten Seite eine sich radial nach außen erstreckende Schulter 27 auf, die mit einer Stirnfläche auf einer formgleichen Stirnfläche des Gehäuses 3 aufliegt. In dem dargestellten Ausführungsbeispiel sind Gehäuse 3 und Prozeßanschluß 25 zwei Bauteile, die mittels durch die Schulter 27 hindurch in das Gehäuse 3 eingeschraubte Bolzen 28 miteinander verbunden sind. Gehäuse 3 und Prozeßanschluß 25 können aber auch einteilig ausgebildet sein.

An einem gehäuse-abgewandten Ende weist der Prozeßanschluß 25 einen zylindrischen Endabschnitt auf, an den ein Außengewinde 30 angeformt ist. Das Außengewinde 30 dient zur Befestigung des Druckmeßaufnehmers an einem Meßort. Selbstverständlich können statt des Außengewindes 30 auch andere Befestigungsvorrichtungen, z.B. Flansche, vorgesehen sein.

Die Membran 7 ist in dem in Fig. 1 dargestellten Ausführungsbeispiel eine Meßmembran einer keramischen Druckmeßzelle 1 und der Prozeßanschluß 25 weist vor der Membran 7 eine von einer zylindrischen Mantelfläche 29 und einer daran an deren membran-abgewandten Seite angrenzenden sich radial nach innen erstreckende Absatzfläche 31 eingegrenzte ringförmige Ausnehmung auf.

In der Ausnehmung ist eine Dichtung 33 vorgesehen, die einen zwischen dem Gehäuse 3 und dem Prozeßanschluß 25 und/oder der Membran 7 bestehenden Spalt abdichtet. In dem in Fig. 1 dargestellten Ausführungsbeispiel sind Gehäuse 3 und Prozeßanschluß 25 zwei getrennte Bauteile. Es ist hier also der Spalt zwischen dem Gehäuse 3 und dem Prozeßanschluß 25 und der Spalt zwischen dem Gehäuse 3 und der Membran 7 bzw. der keramischen Druckmeßzelle 1 abzudichten. Bei einer einteiligen Ausführung von Gehäuse 3 und Prozeßanschluß 25 entfällt der Spalt zwischen dem Gehäuse 3 und dem Prozeßanschluß 25. Die Dichtung 33 dient dann dazu den Spalt zwischen dem Gehäuse 3 und der Membran 7 der keramischen Druckmeßzelle 1 abzudichten.

Die Dichtung 33 liegt in beiden Fällen unmittelbar an den Spalten an und überdeckt sie. Die Dichtung 33 ist zwischen einem äußeren druckunempfindlichen Rand der Membran 7 und der Absatzfläche 31 des Prozeßanschlusses 25 eingespannt.

Die Dichtung 33 besteht vorzugsweise aus einem chemisch hochbeständigen Material, z.B. aus einem Fluorkarbon, insb. aus Polytetrafluorethylen (PTFE). Da diese Materialien in der Regel abhängig von den auf sie einwirkenden Drücken und/oder Temperaturen fließfähig sind, ist eine Feder 35 vorgesehen, die die Dichtung 33 in Form hält.

Die Feder 35 ist im Querschnitt zweischenklig. Die beiden Schenkel treffen in einem spitzen Winkel aufeinander. Die Feder 35 hat also ein v-förmiges Profil. Sie liegt mit einer ersten von dem zweiten Schenkel abgewandten Schenkelfläche 37 des ersten Schenkels auf einer Stützfläche auf und ist mit dieser fest verbunden. In dem in Fig. 1 dargestellten Ausführungsbeispiel bildet die Absatzfläche 31 des Prozeßanschlusses 25 die Stützfläche. Die Stützfläche ist metallisch und die Feder 35 ist mit der Stützfläche durch eine Schweißung 41 verbunden.

Eine zweite von dem ersten Schenkel abgewandte Schenkelfläche 39 des zweiten Schenkels der Feder 35 liegt flächig an der Dichtung 33 an und übt eine in Richtung des Spalts wirkende Federkraft auf die Dichtung 33 aus.

Die Dichtung 33 ist ringförmig und weist einen dreieckigen Querschnitt auf. Eine erste Mantelfläche der Dichtung 33 liegt an einem äußeren druckunempfindlichen Rand der Membran 7 auf. Eine zweite Mantelfläche der Dichtung 33 liegt an der zylindrischen Mantelfläche 29 des Prozeßanschlusses 25 auf und eine dritte Mantelfläche der Dichtung 33 liegt flächig an der zweiten Schenkelfläche 39 der Feder an.

Die Feder 35 besteht aus einem federelastischen Metall, z.B. aus einem Edelstahl. Bei Bedarf kann sie z.B. mit einer hochbeständigen Legierung beschichtet sein oder vollständig aus einem hochwertigen Material, z.B. Hastelloy, bestehen.

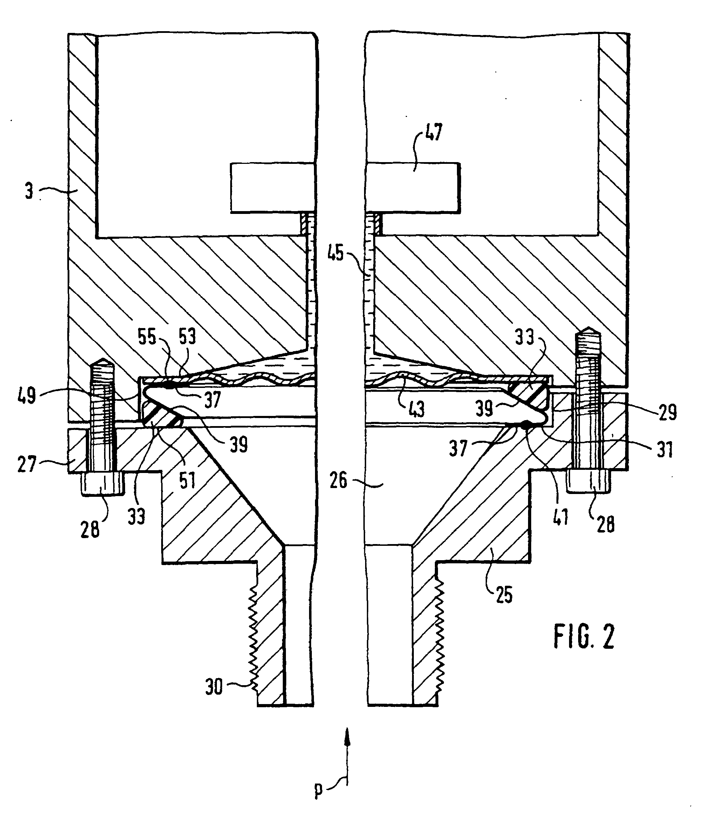

Fig. 2 zeigt ein weiteres Ausführungsbeispiel eines erfindungsgemäßen Druckmeßaufnehmers. Aufgrund der großen Übereinstimmung zu dem in Fig. 1 dargestellten Ausführungsbeispiel werden nachfolgend lediglich die Unterschiede gegenüber dem in Fig. 1 dargestellten Ausführungsbeispiel näher erläutert.

Der wesentliche Unterschied besteht darin, daß bei dem in Fig. 2 dargestellten Ausführungsbeispiel keine in das Gehäuse 3 eingefaßte keramische Druckmeßzelle vorgesehen ist, sondern das Gehäuse 3 eine Öffnung aufweist, die von einer Membran 43 verschlossen ist. Die Membran 43 ist eine metallische Trennmembran eines im Gehäuse 3 angeordneten Druckmittlers. Die Membran 43 ist z.B. an einem äußeren druckunempfindlichen Rand auf auf das Gehäuse 3 aufgeschweißt. Der Druckmittler weist eine an die prozeßanschluß-abgewandte Seite der Membran 43 angrenzende mit einer Druckmittlerflüssigkeit, z.B. einem Silikonöl, gefüllte Kammer auf, die über eine ebenfalls flüssigkeitsgefüllte Druckleitung 45 an eine Druckmeßzelle 47 angeschlossen ist. Ein auf die Membran 43 einwirkender Druck p bewirkt eine Auslenkung der Membran 43 und wird durch die Druckmittlerflüssigkeit zur Druckmeßzelle 47 übertragen. Die Druckmeßzelle 47 erfaßt den auf sie einwirkenden Druck und wandelt diesen in eine elektrische Meßgröße um, die einer weiteren Verarbeitung und/oder Auswertung zur Verfügung steht.

Da die Membran 43 metallisch ist, können die Dichtung 33 und die Feder 35 auf zweierlei Weise angeordnet sein.

In der rechten Hälfte von Fig. 2 ist eine Anordnung dargestellt, die der in Fig. 1 in Verbindung mit der keramischen Membran 7 dargestellten Anordnung entspricht. Die Membran 43 ist dort frontbündig an das Gehäuse 3 angeschweißt und der Prozeßanschluß 25 weist vor der metallischen Trennmembran eine, von einer zylindrischen Mantelfläche 29 und einer daran an deren membran-abgewandten Seite angrenzenden sich radial nach innen erstreckenden Absatzfläche 31 eingegrenzte, ringförmige Ausnehmung auf. Die Absatzfläche 31 bildet die Stützfläche für die Feder 35. Die Dichtung 33 weist auch hier einen dreieckigen Querschnitt auf und liegt mit einer ersten Mantelfläche an einem äußeren druckunempfindlichen Rand der Membran 43 auf. Die zweite Mantelfläche der Dichtung 33 liegt an der zylindrischen Mantelfläche 29 auf, und die dritte Mantelfläche der Dichtung liegt flächig an der zweiten Schenkelfläche 39 der Feder 35 an.

Bei dem in der linken Hälfte von Fig. 2 dargestellten Ausführungsbeispiel ist die Membran 43 nicht frontbündig, sondern gegenüber einer Gehäusefront etwas zurückversetzt angeordnet. Das Gehäuse 3 weist vor der metallischen Trennmembran eine von einer zylindrischen Mantelfläche 49 umgebene Ausnehmung auf. Der Prozeßanschluß 25 ist vor der zylindrischen Mantelfläche 49 angeordnet und weist eine an eine membran-abgewandte Seite der zylindrischen Mantelfläche 49 angrenzende sich radial nach innen erstreckende Absatzfläche 51 auf.

Eine äußere druckunempfindliche Ringfläche 53 der Trennmembran bildet die Stützfläche auf der die Feder 35 mit einem Schenkel aufliegt. Die Feder 35 ist z.B. durch eine Schweißung 55 mit der Stützfläche verbunden.

Die Dichtung 33 weist auch hier einen dreieckigen Querschnitt auf. Sie liegt mit einer ersten Mantelfläche auf der Absatzfläche 51 auf. Eine zweite Mantelfläche der Dichtung 33 liegt an der zylindrischen Mantelfläche 49 auf und eine dritte Mantelfläche der Dichtung liegt flächig an der zweiten Schenkelfläche der Feder 35 an.

Die Feder 35 ist identisch zu der in Fig. 1 dargestellten Feder 35. Sie ist lediglich in umgekehrter Weise eingebaut, so daß auch in dem in Fig. 2 dargestellten Ausführungsbeispiel der erste Schenkel auf der Stützfläche aufliegt und der zweite Schenkel mit dessen vom ersten Schenkel abgewandten Schenkelfläche 39 auf der Dichtung 33 flächig aufliegt.

## Patentansprüche

1. Druckmeßaufnehmer mit
- einem Gehäuse (3),
- einem mit dem Gehäuse (3) verbundenen Prozeßanschluß (25),
-- der dazu dient ein Medium dessen Druck (p) zu messen ist einer im Gehäuse (3) angeordneten Membran (7, 43) zuzuführen,
--- welche Membran (7, 43) im Betrieb eine Auslenkung erfährt, die vom zu messenden Druck (p) abhängt,
- einer Dichtung (33),
-- die einen zwischen dem Gehäuse (3) und dem Prozeßanschluß (25) und/oder der Membran (7) bestehenden Spalt abdichtet,
-- die unmittelbar an dem Spalt anliegt und den Spalt überdeckt,
-- die zwischen dem Gehäuse (3) und der Membran (7, 43) eingespannt ist, und
- einer im Querschnitt zweischenkligen Feder (35),
-- deren erster und zweiter Schenkel einen spitzen Winkel einschließen,
-- deren erster Schenkel eine vom zweiten Schenkel abgewandte Schenkelfläche (37, 53) aufweist, die auf einer Stützfläche aufliegt und mit dieser fest verbunden ist und
-- deren zweiter Schenkel eine vom ersten Schenkel abgewandte Schenkelfläche (39) aufweist, die flächig an der Dichtung (33) anliegt und eine in Richtung des Spalts wirkende Federkraft auf die Dichtung (33) ausübt.

2. Druckmeßaufnehmer nach Anspruch 1, bei dem
die Dichtung (33) aus einem Fluorkarbon, insb. aus Polytetrafluorethylen (PTFE) besteht.

3. Druckmeßaufnehmer nach Anspruch 1, bei dem
die Stützfläche metallisch ist und die Feder (35) durch eine Schweißung (41, 55) mit der Stützfläche verbunden ist.

4. Druckmeßaufnehmer nach Anspruch 1, bei dem
die Feder (35) aus einem federelastischen Metall besteht.

5. Druckmeßaufnehmer nach Anspruch 1, bei dem
- die Membran (7) eine in dem Gehäuse (3) angeordnete Meßmembran einer keramischen Druckmeßzelle (1) ist,
- der Prozeßanschluß (25) vor der Meßmembran eine, von einer zylindrischen Mantelfläche (29) und einer daran an deren membran-abgewandten Seite angrenzenden sich radial nach innen erstreckende Absatzfläche (31) eingegrenzte, ringförmige Ausnehmung aufweist,
- die Absatzfläche (31) die Stützfläche bildet,
- die Dichtung (33) einen dreieckigen Querschnitt aufweist,
- eine erste Mantelfläche der Dichtung (33) an einem äußeren druckunempfindlichen Rand der Meßmembran aufliegt,
- eine zweite Mantelfläche der Dichtung (33) an der zylindrischen Mantelfläche (29) aufliegt, und
- eine dritte Mantelfläche der Dichtung (33) flächig an der zweiten Schenkelfläche (39) der Feder (35) anliegt.

6. Druckmeßaufnehmer nach Anspruch 1, bei dem
- die Membran (43) eine metallische Trennmembran eines im Gehäuse (3) angeordneten Druckmittlers ist,
- der Prozeßanschluß (25) vor der Trennmembran eine von einer zylindrischen Mantelfläche (29) und einer daran an deren membran-abgewandten Seite angrenzenden sich radial nach innen erstreckende Absatzfläche (31) eingegrenzte ringförmige Ausnehmung aufweist,
- die Absatzfläche (31) die Stützfläche bildet,
- die Dichtung (33) einen dreieckigen Querschnitt aufweist,
- eine erste Mantelfläche der Dichtung (33) an einem äußeren druckunempfindlichen Rand der Trennmembran aufliegt,
- eine zweite Mantelfläche der Dichtung (33) an der zylindrischen Mantelfläche (31) aufliegt, und
- eine dritte Mantelfläche der Dichtung (33) flächig an der zweiten Schenkelfläche (39) der Feder (35) anliegt.

7. Druckmeßaufnehmer nach Anspruch 1, bei dem
- die Membran (43) eine metallische Trennmembran eines im Gehäuse (3) angeordneten Druckmittlers ist,
- das Gehäuse (3) vor der Trennmembran eine von einer zylindrischen Mantelfläche (49) umgebene Ausnehmung aufweist,
- der Prozeßanschluß (25) vor der zylindrischen Mantelfläche (49) angeordnet ist und
- eine an eine membran-abgewandte Seite der zylindrischen Mantelfläche (49) angrenzende sich radial nach innen erstreckende Absatzfläche (51) aufweist,
- eine äußere druckunempfindliche Ringfläche (53) der Trennmembran die Stützfläche bildet,
- die Dichtung (33) einen dreieckigen Querschnitt aufweist,
- eine erste Mantelfläche der Dichtung (33) auf der Absatzfläche (51) aufliegt,
- eine zweite Mantelfläche der Dichtung (33) an der zylindrischen Mantelfläche (49) aufliegt, und
- eine dritte Mantelfläche der Dichtung (33) flächig an der zweiten Schenkelfläche der Feder (35) anliegt.

## Claims

1. Pressure sensor having
- a housing (3),
- a process connection (25) which is connected to the housing (3)
-- and serves to feed a medium whose pressure (p) is to be measured to a membrane (7, 43) which is arranged in the housing (3),
--- said membrane (7, 43), in operation, undergoing a deflection which depends on the pressure (p) which is to be measured,
- a seal (33)
-- which seals a gap found between the housing (3) and the process connection (25) and/or the membrane (7),
-- which bears directly against the gap and covers the gap, and
-- which is clamped between the housing (3) and the membrane (7, 43), and
- a spring (35) which is two-legged in cross section,
-- whose first and second legs enclose an acute angle,
-- whose first leg has a leg surface (37, 53) which faces away from the second leg, rests on a supporting surface and is connected fixedly to the latter, and
-- whose second leg has a leg surface (39) which faces away from the first leg, bears in a planar manner against the seal (33) and exerts a spring force on the seal (33), which spring force acts in the direction of the gap.

2. Pressure sensor according to Claim 1, in which the seal (33) consists of a fluorocarbon, in particular of polytetrafluoroethylene (PTFE).

3. Pressure sensor according to Claim 1, in which the supporting surface is metallic and the spring (35) is connected to the supporting surface by a weld (41, 55).

4. Pressure sensor according to Claim 1, in which the spring (35) consists of an elastic metal.

5. Pressure sensor according to Claim 1, in which
- the membrane (7) is a measuring membrane of a ceramic pressure-measuring cell (1), which measuring membrane is arranged in the housing (3),
- the process connection (25) has, upstream of the measuring membrane, an annular recess which is bounded by a cylindrical circumferential surface (29) and a radially inwardly extending shoulder surface (31) adjacent to the cylindrical circumferential surface on its side facing away from the membrane,
- the shoulder surface (31) forms the supporting surface,
- the seal (33) has a triangular cross section,
- a first circumferential surface of the seal (33) rests against an outer, pressure-insensitive edge of the measuring membrane,
- a second circumferential surface of the seal (33) rests against the cylindrical circumferential surface (29), and
- a third circumferential surface of the seal (33) bears in a planar manner against the second leg surface (39) of the spring (35).

6. Pressure sensor according to Claim 1, in which
- the membrane (43) is a metallic separating membrane of a pressure-transmitting means arranged in the housing (3),
- the process connection (25) has, upstream of the separating membrane, an annular recess which is bounded by a cylindrical circumferential surface (29) and a radially inwardly extending shoulder surface (31) adjacent to the cylindrical circumferential surface on its side facing away from the membrane,
- the shoulder surface (31) forms the supporting surface,
- the seal (33) has a triangular cross section,
- a first circumferential surface of the seal (33) rests against an outer, pressure-insensitive edge of the separating membrane,
- a second circumferential surface of the seal (33) rests against the cylindrical circumferential surface (31), and
- a third circumferential surface of the seal (33) bears in a planar manner against the second leg surface (39) of the spring (35).

7. Pressure sensor according to Claim 1, in which
- the membrane (43) is a metallic separating membrane of a pressure-transmitting means arranged in the housing (3),
- the housing (3) has, upstream of the separating membrane, a recess which is surrounded by a cylindrical circumferential surface (49),
- the process connection (25) is arranged upstream of the cylindrical circumferential surface (49) and
- has a radially inwardly extending shoulder surface (51) adjacent to a side of the cylindrical circumferential surface (49) which faces away from the membrane,
- an outer, pressure-insensitive annular surface (53) of the separating membrane forms the supporting surface,
- the seal (33) has a triangular cross section,
- a first circumferential surface of the seal (33) rests on the shoulder surface (51),
- a second circumferential surface of the seal (33) rests against the cylindrical circumferential surface (49), and
- a third circumferential surface of the seal (33) bears in a planar manner against the second leg surface of the spring (35).

## Revendications

1. Capteur de pression avec :
- un boîtier (3)
- une connexion de procédé (25) liée au boîtier (3),
-- laquelle connexion sert à amener un médium dont on doit mesurer la pression (p) vers une membrane (7,43) disposée dans le boîtier (3),
--- laquelle membrane (7,43) est soumise pendant le service à une flexion qui dépend de la pression (p) à mesurer,
- un joint d'étanchéité (33) qui rend étanche
-- une fente existant entre le boîtier (3) et la connexion de procédé (25) et/ou la membrane (7),
-- lequel joint est appliqué directement sur la fente et recouvre ladite fente,
-- lequel joint est serré entre le boîtier (3) et la membrane (7,43), et
- un ressort (35) présentant deux branches en section transversale,
-- dont la première et la deuxième branche dudit ressort forment un angle aiguë,
-- dont la première branche dudit ressort présente une surface de branche (35, 53) détournée de la deuxième branche, laquelle surface de branche repose sur une surface d'appui et est liée de façon fixe avec celle-ci, et
-- dont la deuxième dudit ressort présente une surface de branche (39) détournée de la première branche, laquelle surface est appliquée de façon bidimensionnelle sur le joint (33), et exerce une force de ressort sur le joint (33) en direction de la fente.

2. Capteur de pression selon la revendication 1, dans lequel le joint (33) est constitué d'un fluorocarbone , notamment en polytetrafluoréthylène (PTFE).

3. Capteur de pression selon la revendication 1, dans lequel la surface d'appui est métallique et dans lequel le ressort (35) est lié par une soudure (41, 55) avec la surface d'appui.

4. Capteur de pression selon la revendication 1, dans lequel le ressort (35) est constitué d'un métal élastique pour ressort.

5. Capteur de pression selon la revendication 1, dans lequel
- la membrane (7) est une membrane de mesure d'une cellule (1) de mesure de pression céramique disposée dans le boîtier (3),
- dans lequel la connexion de procédé (25) devant la membrane de mesure, comporte un évidement annulaire limité par une surface d'enveloppe cylindrique (29) et une surface de pose (31) s'étendant vers l'intérieur de façon radiale, contiguë au côté de ladite surface détourné de la membrane,
- laquelle surface de pose (31) forme la surface d'appui,
- le joint (33) présentant une section transversale triangulaire,
- une première surface d'enveloppe du joint (33) étant appliquée sur un bord extérieur insensible à la pression de la membrane de mesure,
- une deuxième surface d'enveloppe du joint (33) étant appliquée sur la surface d'enveloppe (29) cylindrique et,
- une troisième surface d'enveloppe du joint (33) étant appliquée de façon bidimensionnelle sur la deuxième surface de branche (39) du ressort (35).

6. Capteur de pression selon la revendication 1, dans lequel
- la membrane (43) est une membrane de séparation métallique d'un transmetteur de pression disposé dans le boîtier (3),
- la connexion de procédé (25) devant la membrane de mesure, comportant un évidement annulaire limité par une surface d'enveloppe cylindrique (29) et une surface de pose (31) s'étendant vers l'intérieur de façon radiale, contiguë au côté de ladite surface détourné de la membrane,
- laquelle surface de pose (31) forme la surface d'appui,
- le joint (33) présentant une section transversale triangulaire,
- une première surface d'enveloppe du joint (33) étant appliquée sur un bord extérieur insensible à la pression de la membrane de mesure,
- une deuxième surface d'enveloppe du joint (33) étant appliquée sur la surface d'enveloppe (29) cylindrique et,
- une troisième surface d'enveloppe du joint (33) étant appliquée de façon bidimensionnelle sur la deuxième surface de branche (39) du ressort (35).

7. Capteur de pression selon la revendication 1, dans lequel
- la membrane (43) est une membrane de séparation métallique d'un transmetteur de pression disposé dans le boîtier (3),
- le boîtier (3) devant la membrane de séparation présentant un évidement entouré par une surface d'enveloppe (49) cylindrique,
- la connexion de procédé (25) étant disposée devant la surface d'enveloppe (49) cylindrique et,
- présentant une surface de pose (51) contiguë à un côté détourné de la membrane et s'étendant de façon radiale vers l'intérieur,
- une surface annulaire (53) extérieure, insensible à la pression de la membrane de séparation, formant la surface d'appui,
- le joint (33) présentant une section transversale triangulaire,
- une première surface d'enveloppe du joint (33) étant appliquée sur la surface de pose (51),
- une deuxième surface d'enveloppe du joint (33) étant appliquée sur la surface d'enveloppe cylindrique (49), et
- une troisième surface d'enveloppe du joint (33) étant appliquée de façon bidimensionnelle sur la deuxième surface de branche du ressort (35).
